# EUROPEAN PATENT APPLICATION

(11) **EP 3 716 152 A1**
(43) Date of publication of application: **30.09.2020**
(21) Application number: 19165096.9
(22) Date of filing: 26.03.2019
(51) Int. Cl.: G06N 3/04, G06N 3/08

(54) **REUSING OF NEURAL NETWORK TRAINING FOR HIGHER DIMENSIONAL DATA**

(71) Applicant: Robert Bosch GmbH, 70442 Stuttgart (DE)
(72) Inventor: Klar, Michael, 74177 Bad Friedrichshall (DE); Lou, Zhongyu, 71272 Renningen (DE); Nguyen, Duc Tam, 76133 Karlsruhe (DE)

(57) **Abstract**

A method (100) for adapting a neural network (1), which is pre-trained to handle input data of dimensionality N, to the handling of input data (1a) of dimensionality M, with M > N, the method (100) comprising: for at least one layer (11) of the neural network (1) that accepts input data (11a) of dimensionality n and maps these input data (11a) to output data (11c) of dimensionality o with a processing function characterized by a set (11b) of weights, scaling and/or augmenting (110) the processing function so that it accommodates input data (11a) of a dimensionality m > n while remaining characterized by the same set (11b) of weights.

A method (200) for processing input data (1a) of dimensionality M with a neural network (1) that was trained to handle input data (1a) of dimensionality N < M.

A method (300) for further training a pre-trained neural network (1).

## Description

The present invention relates to neural networks, particularly neural networks for use in image classification tasks.

### Background

Deep learning of neural networks has improved the performance of many real world image classification applications. For example, image classification is vital in control systems for at least partially automated vehicles that quickly have to react to objects appearing in their surroundings. US 2019/033 865 A1 gives one example of a control system that employs multiple such networks.

Training of very deep models requires a large amount of computation resources. For example, training a model of the well-known "Resnet-101" type may take weeks even on a powerful GPU. Once such a training effort has been expended, it is desirable to re-use the trained model in as many cases as possible, so as to shorten the time and reduce the financial effort for the concrete task at hand. To this end, popular neural network software packages like MATLAB and Keras come with pre-trained neural networks.

### Disclosure of the invention

The inventors have developed a method for adapting a neural network, which is-pre-trained to handle input data of dimensionality N, to the handling of input data of dimensionality M, with M > N.

The inventors have found that in order to save computational resources, the pre-training of neural networks is often limited to rather low dimensionalities of the input data compared with the dimensionalities occurring in real-world applications. For example, when a network is used for processing images as input data, the image resolution is often limited to a mere 256x256 pixels that correspond to a dimensionality of 65,536. But in real-world applications, such as object recognition in the environment of a vehicle, images of 2048x2048 pixels that correspond to a dimensionality of 4,194,304 are not uncommon. Of course, an input image may be scaled down so that the input layer of the neural network may accommodate it, e.g., to 256x256 pixels. However, such scaling may obliterate small but important details in the input image.

Therefore, according to the method, for at least one layer of the neural network that accepts input data of dimensionality n and maps these input data to output data of dimensionality o with a processing function characterized by a set of weights, this processing function is scaled and/or augmented so that it accommodates input data of a dimensionality m > n while remaining characterized by the same set of weights.

In this manner, the training that has already gone into the network may be directly used on the higher-dimensional data, so that the previously expended effort may be re-used. For example, this permits directly working on a high-resolution image without having to scale this image down to an image size with which the neural network was pre-trained, so as to immediately obtain inference results.

Also, the neural network may be trained further using the higher dimensional data. For example, a neural network that has been pre-trained with fairly generic input data may be trained further using input data that is more specific to the task at hand. For example, a neural network that is used for image classification may have been pre-trained using a large but very generic set of images that is "labelled" with the types of objects contained therein. It may then be trained at the image resolution that occurs in the specific task at hand. This alleviates several bottlenecks in the training to this specific task.

First, when starting the training of a neural network from scratch, a fairly large set of input data and corresponding "ground truth" is required for the neural network to become proficient at its task. For example, to train a network for image classification, several tens of thousands, or several hundreds of thousands, training images may be required.

For the actual task at hand, such as locating defects in a particular product or classifying a potential medical condition from a medical image, such a large set of training data may not be readily available. Obtaining training data for defects in products may require manufacturing a sufficient number of units of the product first, creating a chicken-and-egg problem. Obtaining training data for classifying medical conditions may require the labelling of medical images by a clinical expert.

On the other hand, generic sets of labelled images for training image classification are readily available. However, such data sets are typically only available at a lower resolution.

The combination of the generic pre-training and the specific further training is somewhat akin to human learning. When a child learns how to use roller skates and ice skates, it learns some basics about how to keep the balance when the feet are in some mobility aids that swiftly move relative to the ground. When the child later moves on to skiing, the skis fall under the same generic class of "mobility aids that swiftly move relative to the ground". So learning how to ski is much easier if the child has previously learned how to use roller skates and ice skates.

Second, the further training still works on the same number of weights that were originally used during the pre-training. This means that during the further training, the memory requirement for the model is much less than if the model was trained from scratch on the higher-dimensional data. When training on a GPU, the model as a whole, including all weights in all layers, must fit into the video RAM of this GPU. Either it fits in there, or the training is limited to CPU only. The price for the GPU increases disproportionately with the amount of video RAM.

The adaptation of the network itself does not depend on the nature of the data that is being handled. However, in a major use case, the data is physical measurement data captured by at least one sensor, such as images. It may then be the job of the neural network to draw some kind of conclusion from the data. This conclusion, such as a classification of objects that the image shows, typically has a much lower dimensionality than the input data.

In a particularly advantageous embodiment, the layer whose processing function is scaled and/or augmented is chosen to be an input layer of the neural network that was trained to handle input data of dimensionality N. The processing function of this layer is scaled and/or augmented to accommodate input data of dimensionality M. In this manner, no pre-processing of the higher-dimensional input data is necessary before inputting this data to the neural network, so no information is lost.

In a further particularly advantageous embodiment, the processing function of the layer is scaled and/or augmented in a manner that the dimensionality of the output data it produces remains o. In this manner, all subsequent layers may use the output of the layer as they did before.

For example, the processing function of layer, e.g., an input layer, of the neural network may be scaled and/or augmented so that, rather than mapping input data of dimensionality N to output data of dimensionality o, it now maps input data of dimensionality M to output data of dimensionality o.

One way to tailor the processing function of the affected layer to accommodate higher-dimensional input data, while keeping the dimensionality of the output data constant, is to upsample a kernel of the layer and to commensurately adapt the stride with which this kernel is applied to the input data.

Therefore, in a particularly advantageous embodiment, the layer is a convolutional layer or a pooling layer. The scaling and/or augmenting of the processing function of the layer comprises upsampling of the convolution kernel, respectively of the pooling window. At the same time, the stride with which this convolution kernel, respectively this pooling window, is applied to the input data is increased by an amount commensurate with said upsampling.

In one exemplary embodiment, the input layer of the pre-trained neural network may be configured to accommodate images comprising A×A pixels as input data, corresponding to a dimensionality of N=A². The method may then be used to adapt the neural network to handle images comprising B×B pixels, corresponding to a dimensionality of M=B². A convolution or pooling kernel may initially have a receptive field comprising F×F pixels. To this end, a scaling factor S may be determined as S=floor(B/A). The convolution or pooling kernel may then be upsampled to (S*F)×(S*F) pixels, and the stride with which this kernel is applied to the image data, i.e., moved across the image data along each coordinate axis, may be multiplied by S. In case B is not divisible by A, the images may be resized to (A*S)×(A*S) pixels. Any suitable method, such as linear interpolation, polynomial interpolation or spline interpolation, may be used for the upsampling.

In a further particularly advantageous embodiment, the layer is a fully connected layer. The scaling and/or augmenting of the processing function of this layer comprises upsampling the assignment of the weights to connections in the layer, so that the same set of weights characterizes the increased amount of connections caused by the adapting to input data of dimensionality m > n. This is more of an "augmenting" of the processing function of the layer than it is a "scaling", as the layer actually gets additional neurons. The universal concept of upsampling the processing function so that the processing of a larger amount of input data still depends on the original set of weights is not limited to convolutional or pooling layers having some sort of kernel.

In a further particularly advantageous embodiment, the neural network comprises a combination of:
- a convolutional layer that accepts input data of dimensionality n and delivers output data of dimensionality o, and
- a pooling layer that accepts input data of dimensionality p ≤ o and maps them to output data of dimensionality r < o.
Herein, the pooling layer may be directly adjacent to the convolutional layer. In this case, p is equal to o. But this is not required. Rather, there may be further layers between the convolutional layer and the pooling layer that reduce the dimensionality from a value of o to a value of p < o.

The processing function of the convolutional layer is scaled so that it accommodates input data of dimensionality m > n and delivers output data of dimensionality o' > o. The processing function of the pooling layer is scaled and/or augmented so that it still delivers output data of dimensionality r. That is, the adapting of the convolutional layer only bridges a part of the dimensionality gap between the new input dimensionality m and the desired dimensionality r that the combination of the convolutional layer and the pooling layer as a whole is to deliver. The rest of this gap is bridged by the adapting of the pooling layer.

In the mentioned example of the input data being images, if a large scaling factor S is needed, then this may be decomposed into two scaling factors S1 and S2 with S1*S2=S. S1 may then be used as a scaling factor for adapting the convolutional layer, and S2 may be used as a scaling factor for adapting the pooling layer. For example, if the neural network was pre-trained for images comprising 256×256 pixels, and it shall now handle images comprising 1024×1024 pixels, then a scaling factor S=4 is needed. This may be decomposed into S1=2 for the adapting of the convolutional layer and S2=2 for the adapting of the pooling layer.

It should be noted that the mentioned examples only assume the input images to be square for simplicity. The method may just as well be used on rectangular images. For example, if the network has been pre-trained to handle images comprising A1×A2 pixels and having dimensionality N=A1*A2, and it is to be adapted to handle images comprising B1×B2 pixels and having dimensionality M=B1*B2, then two different scaling factors Sₓ=floor(B1/A1) and S_{y}=floor(B2/A2) may be computed with respect to the two coordinate axes x and y. The input images may then be scaled to (Sₓ*N1)×(S_{y}*N2) pixels, and convolution and/or pooling kernels comprising F1×F2 pixels may be scaled to (Sₓ*F1)×(S_{y}*F2) pixels.

Furthermore, the mentioned examples shall not be interpreted in the sense that the method is limited to two-dimensional images, or that it is limited to images at all. Rather, the method may be applied to any case where the network has been pre-trained to handle input data of dimensionality N and is to be adapted to handle input data of dimensionality M. For example, the method may be applied to neural networks that handle images whose pixels are arranged in a three-dimensional space, or it may be applied to neural networks that handle different kinds of data, such as audio data or other physical measurement data that is present in the form of a time-series.

In a further particularly advantageous embodiment, the method further comprises scaling the input data of dimensionality M down to a dimensionality M' < M before inputting it into an input layer of the neural network. When a given gap between a dimensionality M of to-be-processed input data and a dimensionality N of the training data with which the neural network was trained is present, scaling the input data down, the "ideal" solution would be to retrain the network from scratch so that it can handle input data of dimensionality M. Compared with this "ideal" solution, scaling the input data down produces a lower average error than scaling the processing function of a layer up, and/or augmenting such a processing function, to handle input data of the higher dimensionality M. The scaling down may even eliminate some noise. But as already mentioned, there is a limit to the scaling. The lower average error is of no use if the features that are to be detected, such as tiny defects in a product, are obliterated by the scaling. Therefore, the optimal solution is to scale the input data down to a dimensionality M' < M where the relevant features for the application at hand are still clearly discernible in the input data. The neural network, pre-trained for handling input data of dimensionality N < M', may then be adapted to handle input data of dimensionality M', rather than input data of dimensionality M.

The invention also provides a method for processing input data of dimensionality M with a neural network that was trained to handle input data of dimensionality N < M. In the course of this method, the neural network is adapted to handle input data of dimensionality M using the method described above. The input data is then processed with the adapted neural network.

As described above, this method permits to better re-use a pre-training that has already gone into the training of the neural network. The output data that is produced may not necessarily be the "perfect" output data that would be obtained if the neural network was trained from scratch to handle input data of dimensionality M. Rather, this output data will be a reasonable approximation of the "perfect" output data based on the existing training.

If the neural network is a fully convolutional network, then it might also be used directly to process the input data of dimensionality M without first being adapted. But even in this case, first adapting the neural network has the advantage that the inference requires far less memory than when using the un-adapted network.

The invention also provides a further method for further training a neural network that was pre-trained to handle input data of dimensionality N. In the course of this method, the neural network is adapted to handle input data of dimensionality M > N using the first method described above. The neural network is then further trained with training data of dimensionality M.

As discussed before, a major use case is to build upon a neural network that has received a generic pre-training, and further train this network for a task that is a special case of the task to which it was pre-trained. In this manner, a large set of available generic training data may be used for the generic pre-training, and a relatively small set of application-specific training data may then suffice for the further training. For example, a generic training for the generic task of object classification in images may use tens of thousands, or hundreds of thousands, images from all walks of life. After that, a few hundred application-specific training images may suffice to further train the network to, for example, spot defects in a product. That is, while the pre-training comprises training examples that teach the neural network how to distinguish dogs from cats and from chairs, the further training may build on this and teach the network to distinguish defect-free products from defective products.

The output of the neural network may, for example, comprise a classification of images with regards to at least one property of interest. In automated optical inspection, the property may be the presence or absence of certain defects, or simply a binary classification as defect-free or defective. In medical image analysis, the property may be a tell-tale sign that is an indicator for a medical condition. In remote sensing image analysis, e.g., satellite image analysis, the property may be a feature that indicates a certain property of the ground (e.g., the presence of minerals or water). In the control and/or surveillance of at least partially automated vehicles, the property may be the presence or absence of certain types of objects, such as objects with which the vehicle should not collide. In video surveillance, the property may be the presence and/or movement of people, which shall trigger a recording or an alarm that should not be triggered if only animals and/or plants are moving in the image.

Therefore, in a further advantageous embodiment, at least one input image is processed with the adapted neural network, and based on the outcome of the classification, at least one automated optical inspection apparatus, at least one vehicle, at least one medical imaging system, at least one remote-sensing imaging system, and/or at least one video surveillance system, is actuated.

As discussed before, upsampling of the convolution kernel of a convolutional layer causes the same set of weights that characterize the convolution kernel to act upon more input data than before. This is a "fingerprint" that may indicate, on a given neural network, that one or more of the methods described above have been applied to it. The invention therefore also relates to a neural network that comprises at least one convolutional layer with a convolution kernel. The number of independent weights of the convolution kernel is less than the number of independent inputs in the receptive field of the convolution kernel. Specifically, for example, the number of independent weights of the convolution kernel may be at most half the number of independent inputs in the receptive field of the convolution kernel.

The invention may be at least partially implemented in a software, which has the immediate useful effect of enabling suitable hardware to perform one or more of the methods described above. The invention therefore also relates to a computer program with instructions that, when executed by one or more computers, and/or by a control unit, and/or an embedded system, cause the one or more computers, and/or the control unit, and/or the embedded system, to carry out one or more of the methods as described above. The invention also relates to a non-transitory machine-readable storage medium, and/or to a download product, with this computer program.

The invention also relates to one or more computer, a control unit, and/or an embedded system, with the computer program and/or with the machine-readable storage medium and/or download product as described above. Alternatively or in combination, the computer, the control unit, and/or the embedded system, may be specifically adapted in any other way to perform one or more of the methods as described above. Such adaptation may, for example, comprise implementation of at least parts of the method in one or more field programmable gate arrays, FPGAs, or application-specific integrated circuits, ASIC.

In the following, further advantageous embodiments of the methods are illustrated using Figures without any intention to limit the scope of the invention.

### Embodiments

The Figures show:
Figure 1 Exemplary neural network 1 in original state (Figure 1a); adapted neural network 1' produced by applying an exemplary embodiment of method 100 (Figure 1b);
Figure 2 Exemplary embodiments of method 100 for adapting a neural network 1, method 200 for processing input data 1a, and method 300 for further training a neural network 1;
Figure 3 Effect of method 100 on convolution kernel 11d or pooling kernel 1e of layer 11 in neural network 1;
Figure 4 Potentially detrimental effect of scaling on the detection of a defect 9a in a part 9, which is avoided by the methods 100, 200, 300;

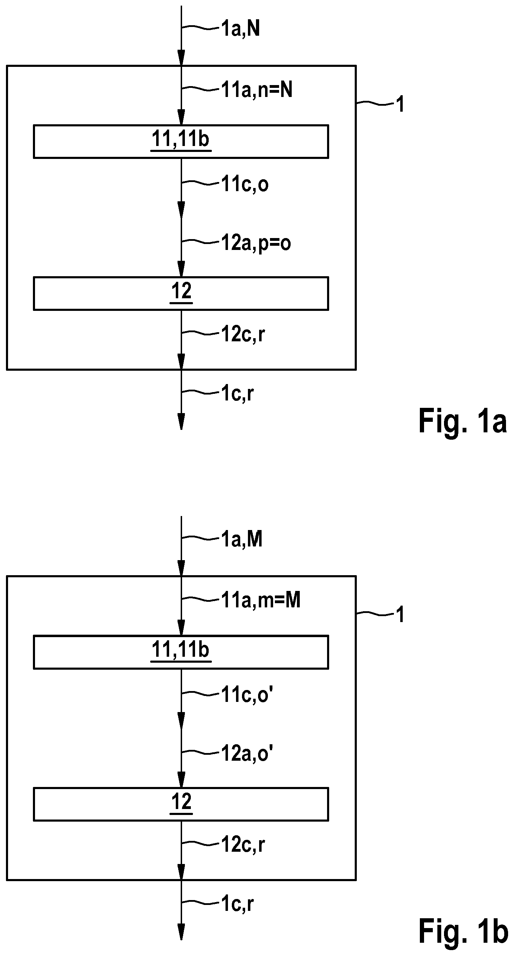

Figure 1a shows a simple example of a neural network 1. The neural network 1 comprises only two layers, namely a convolutional layer 11 and a pooling layer 12. The network 1 as a whole accommodates input data 1a of dimensionality N and delivers output data 1c of dimensionality r.

To this end, the input data 1a of the network 1 as a whole is supplied as input data 11a to the convolutional layer 11. In this example, the dimensionality n of the data 11a is equal to the dimensionality N of the data 1a; however, this is not mandatory. Rather, there may be a pre-processing before the convolutional layer 11 that already reduces the dimensionality n of the input data 11a to a value smaller than N.

The convolutional layer 11 maps the input data 11a of dimensionality n to output data 11c of dimensionality o. This mapping is characterized by a set 11b of weights in the convolutional layer 11. The output data 11c of the convolutional layer 11 is supplied as input data 12a to the pooling layer 12. The pooling layer 12 produces condensed output data 12c with dimensionality r. This is also the output data 1c of the neural network 1 as a whole.

Figure 1b shows the adapted network 1' that results when an exemplary embodiment of the method 100 is applied. The processing function of the convolutional layer 11 is scaled so that the convolutional layer 11a now accepts input of dimensionality m=M, which is much larger than N in this example. The output data 11c of the convolutional layer has a new dimensionality o' that is larger than the previous value o. Consequently, the processing function of the pooling layer 12 is scaled as well, so that it will transform input data 12a of the higher dimensionality o' to output data 12c that still has the same dimensionality r as before. The end result is that the adapted neural network 1' as a whole now accommodates input data 1a of the much higher dimensionality M, but still delivers output data 1c of the same dimensionality r as the original neural network 1 did before.

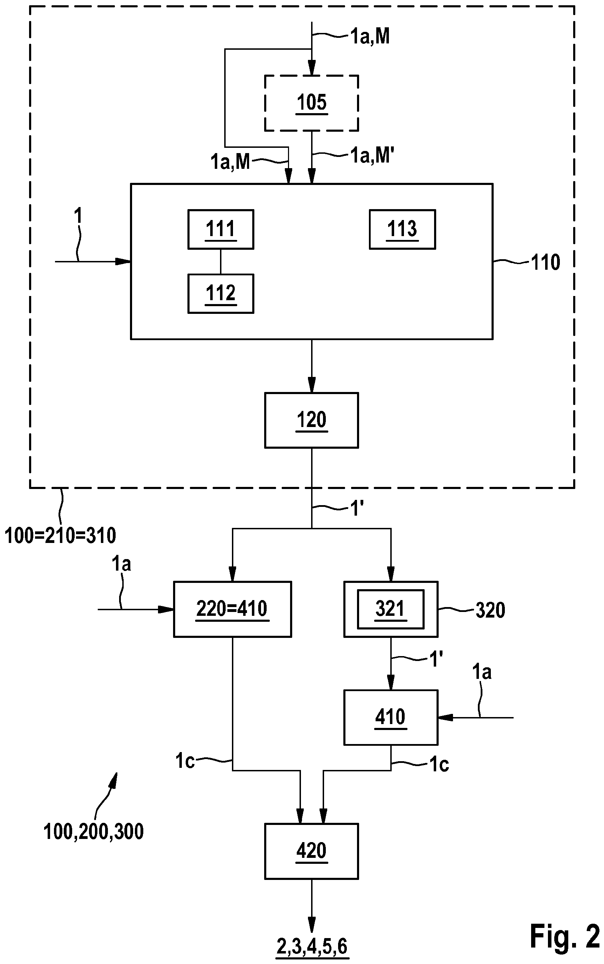

Figure 2 combines embodiments of method 100 for adapting a neural network 1, method 200 for processing input data 1a, and method 300 for further training a neural network 1 for better understanding. Within method 100, which as a whole forms the first step 210 of method 200 and also the first step 310 of method 300, the processing function of at least one layer 11 of the neural network 1 is scaled and/or augmented in step 110. In the example shown in Figure 2, in step 120, the processing function of a pooling layer 12 further downstream is scaled as well. In this manner, when the neural network 1 is adapted to accommodate input data 1a of dimensionality M (rather than N as previously), part of the work is done in the convolutional layer 11, and part of the work is done in the pooling layer 12.

Optionally, in step 105, the input data 1a of dimensionality M may be scaled down to dimensionality M', where N < M' < M. As discussed before, this improves the accuracy of the finally obtained results.

Inside step 110, the convolution kernel 11d of the convolutional layer 11 is upsampled according to block 111. According to block 112, the stride with which this convolution kernel 11d is applied to the input data 11a is scaled by an amount commensurate with said upsampling.

If the layer 11 is a fully connected layer rather than a convolutional layer, then, according to block 113, the assignment of weights 11b to connections in the layer 11 is upsampled, so that the same set 11b of weights characterizes the increased amount of connections caused by the adapting to input data 11a of dimensionality m > n.

After step 120, the adapted neural network 1' results, and method 100 is finished. The adapted neural network 1' may now be used in methods 200 and 300.

In step 220 of method 200, the adapted neural network 1' may be directly used for inference, i.e., to convert input data 1a to output data 1c.

In step 320 of method 300, the adapted neural network 1' may be trained further using training data of the higher dimensionality M to which it has been adapted. According to block 321, this further training may be performed for a task that is a special case of the task to which the neural network 1 was pre-trained. After the further training 320, the adapted neural network 1' may again be used for inference. I.e., it may be used to map input data 1a of dimensionality M to output data 1c.

According to step 420, based on the output data 1c that is, in this example, an outcome of a classification performed by the adapted neural network 1', at least one automated optical inspection apparatus 2, at least one vehicle 3, at least one medical imaging system 4, at least one remote-sensing imaging system 5, and/or at least one video surveillance system 6 may be actuated.

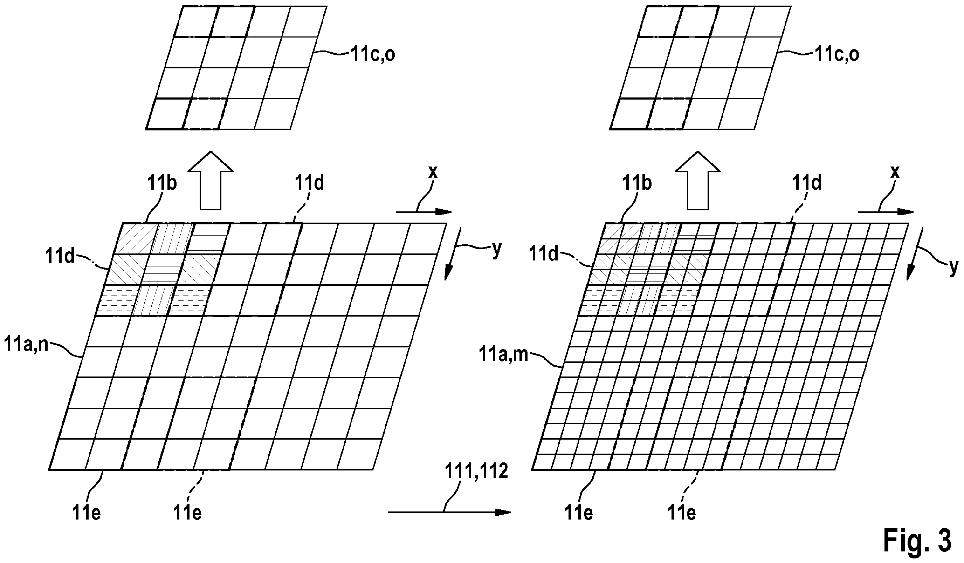

Figure 3 details how convolution kernels 11d, pooling kernels 11e and their respective strides are modified in the course of method 100, as well as the effects that the respective modifications have.

On the left-hand side of Figure 3, the state of the layer 11 where it accepts input data 11 of the old dimensionality n is shown. The convolution kernel 11d has a receptive field of 3x3 pixels, and it is moved along coordinate axes x and y with a stride of 2 pixels . In the output data 11c produced by layer 11, for each possible position of the receptive field of the convolution kernel 11d, the convolution of the pixel values of the input data 11a with the weights 11b in the convolution kernel 11d (shown as different shadings in the receptive field) is recorded.

Likewise, the pixel values inside the receptive field of pooling window 11e are pooled, and the result is recorded in the output data 11c in a position corresponding to the position of the receptive field of the pooling window 11e.

The borders between a convolution kernel 11d and a pooling window 11e are fuzzy. For example, a convolution kernel 11d having weights 11b that are all equal works akin to an average pooling window 11e. Therefore, both the case of a convolution kernel 11d and the case of a pooling window 11e have been drawn in one Figure 3, rather than drawing two separate Figures for the two cases.

The right-hand side of Figure 3 shows the effect of the upsampling 111 of the convolution kernel 11d, respectively of the pooling window 11e. The input data 11a of the layer 11 now has a higher dimensionality m; the same area is divided into more image pixels. Along each coordinate axis, the size of the convolution kernel 11d, respectively of the pooling window 11e, has been doubled from 3 to 6 pixels. Also, the strides have been doubled from 2 to 4 pixels. However, the convolution kernel 11d still depends on the same set 11b of weights. That is, each of the nine different weights 11b is now applied to four pixels of the input data 11a, rather than to only one pixel.

The end result is that the output data 11c of the layer 11, which represents the "feature map" of this layer 11 in the case of a convolutional layer, still has the same dimensionality o despite the input data 11a being of a much higher dimensionality m.

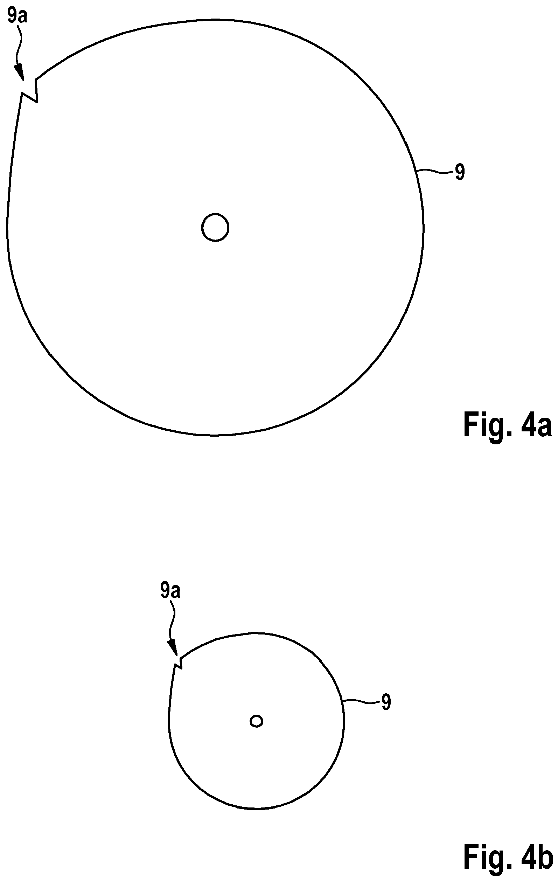

Figure 4 illustrates the benefit of the methods 100, 200, 300 on one schematic example. Figure 4a illustrates a high-resolution image of a machine part 9 with a small defect 9a in it. In this high-resolution image, the defect 9a is clearly visible.

Figure 4b illustrates a low-resolution version of this image, which may result from scaling the high-resolution image down in order to fit the resolution with which a neural network 1 was pre-trained. In this low-resolution version, the defect 9a is barely noticeable and may easily get lost altogether in the discretization of the image processing. If this happens, an automated optical inspection system has no more way of knowing that a defect is present.

This illustrates the advantage of scaling down only to the extent that important features, like the defect 9a, can still be clearly discerned, and increasing the dimensionality of the input data 1a that the neural network 1 can accommodate so that at least an image of this minimum resolution may be processed.

## Claims

1. A method (100) for adapting a neural network (1), which is pre-trained to handle input data of dimensionality N, to the handling of input data (1a) of dimensionality M, with M > N, the method (100) comprising: for at least one layer (11) of the neural network (1) that accepts input data (11a) of dimensionality n and maps these input data (11a) to output data (11c) of dimensionality o with a processing function **characterized by** a set (11b) of weights, scaling and/or augmenting (110) the processing function so that it accommodates input data (11a) of a dimensionality m > n while remaining **characterized by** the same set (11b) of weights.

2. The method (100) of claim 1, wherein the layer (11) is chosen to be an input layer of the neural network (1) that was trained to handle input data (11a) of dimensionality N, and the processing function of this layer (11) is scaled and/or augmented to accommodate input data (11a) of dimensionality M.

3. The method (100) of any one of claims 1 to 2, wherein the processing function of the layer (11) is scaled and/or augmented in a manner that the dimensionality of the output data (11c) it produces remains o.

4. The method (100) of claim 3, wherein the layer (11) is a convolutional layer or a pooling layer, and the scaling and/or augmenting (110) of the processing function of this layer (11) comprises: upsampling (111) of the convolution kernel (11d), respectively of the pooling window (11e), of this layer (11), and increasing (112) the stride with which this convolution kernel (11d), respectively this pooling window (1e), is applied to the input data (11a) by an amount commensurate with said upsampling.

5. The method (100) of any one of claims 1 to 4, wherein the layer (11) is a fully connected layer, and the scaling and/or augmenting (110) of the processing function of this layer (11) comprises: upsampling (113) the assignment of the weights (11b) to connections in the layer (11), so that the same set (11b) of weights characterizes the increased amount of connections caused by the adapting to input data (11a) of dimensionality m > n.

6. The method (100) of any one of claims 1 to 5, wherein the neural network (1) comprises a convolutional layer (11) that accepts input data (11a) of dimensionality n and delivers output data (11c) of dimensionality o, and a pooling layer (12) that accepts input data (12a) of dimensionality p ≤ o and maps them to output data (12c) of dimensionality r < o, and the method (100) comprises:
• scaling and/or augmenting (110) the processing function of the convolutional layer (11) so that it accommodates input data (11a) of dimensionality m > n and delivers output data (11c) of dimensionality o', with o' > o;
• scaling and/or augmenting (120) the processing function of the pooling layer (12) so that it still delivers output data (12c) of dimensionality r.

7. The method (100) of any one of claims 1 to 6, further comprising: scaling (105) the input data (1a) of dimensionality M down to a dimensionality M' < M before inputting it into an input layer of the neural network (1).

8. A method (200) for processing input data (1a) of dimensionality M with a neural network (1) that was trained to handle input data (1a) of dimensionality N < M, comprising the steps of:
• adapting (210), using the method (100) of any one of claims 1 to 7, the neural network (1) to handle input data (1a) of dimensionality M; and
• processing (220) the input data (1a) with the adapted neural network (1').

9. A method (300) for further training a neural network (1) that was pre-trained to handle input data (1a) of dimensionality N, comprising the steps of:
• adapting (310), using the method (100) of any one of claims 1 to 7, the neural network (1) to handle input data of dimensionality M; and
• further training (320) the adapted neural network (1') with training data of dimensionality M.

10. The method (300) of claim 9, wherein the further training (320) is performed (321) for a task that is a special case of the task to which the neural network (1) was pre-trained.

11. The method (100, 200, 300) of any one of claims 1 to 10, wherein the input data (1a) of the neural network (1) comprises images and the output data (1c) of the neural network (1) comprises a classification of the images with regards to at least one property.

12. The method (100, 200, 300) of claim 11, further comprising:
processing (220, 410) at least one input image (1a) with the adapted neural network (1'), and actuating (420), based on the outcome (1c) of the classification, at least one automated optical inspection apparatus (2), at least one vehicle (3), at least one medical imaging system (4), at least one remote-sensing imaging system (5), and/or at least one video surveillance system (6).

13. A neural network (1), comprising at least one convolutional layer (11) with a convolution kernel (11d), where the number of independent weights of the convolution kernel (11d) is less than the number of independent inputs in the receptive field of the convolution kernel (11d).

14. A computer program, comprising instructions that, when executed by one or more computers, and/or by a control unit, and/or an embedded system, cause the one or more computers, and/or the control unit, and/or the embedded system, to carry out a method (100, 200, 300) of any one of claims 1 to 12.

15. A non-transitory machine-readable storage medium, and/or a download product, with the computer program of claim 14.

16. One or more computers, a control unit, and/or an embedded system, with the computer program of claim 14, with the non-transitory machine-readable storage medium of claim 15, and/or specifically adapted in another way to perform a method (100, 200, 300) of any one of claims 1 to 12.

## Amended claims

### Amended claims in accordance with Rule 137(2) EPC.

1. A computer-implemented method (100) for adapting a neural network (1), which is pre-trained to handle input data of dimensionality N, to the handling of input data (1a) of dimensionality M, with M > N, the method (100) comprising: for at least one layer (11) of the neural network (1) that accepts input data (11a) of dimensionality n and maps these input data (11a) to output data (11c) of dimensionality o with a processing function **characterized by** a set (11b) of weights, scaling and/or augmenting (110) the processing function so that it accommodates input data (11a) of a dimensionality m > n while remaining **characterized by** the same set (11b) of weights, wherein
• the processing function of the layer (11) is scaled and/or augmented in a manner that the dimensionality of the output data (11c) it produces remains o. and
• the layer (11) is a convolutional layer or a pooling layer, and the scaling and/or augmenting (110) of the processing function of this layer (11) comprises: upsampling (111) of the convolution kernel (11d), respectively of the pooling window (11e), of this layer (11), and increasing (112) the stride with which this convolution kernel (11d), respectively this pooling window (1e), is applied to the input data (11a) by an amount commensurate with said upsampling.

2. The method (100) of claim 1, wherein the layer (11) is chosen to be an input layer of the neural network (1) that was trained to handle input data (11a) of dimensionality N, and the processing function of this layer (11) is scaled and/or augmented to accommodate input data (11a) of dimensionality M.

3. The method (100) of any one of claims 1 to 2, wherein the layer (11) is a fully connected layer, and the scaling and/or augmenting (110) of the processing function of this layer (11) comprises: upsampling (113) the assignment of the weights (11b) to connections in the layer (11), so that the same set (11b) of weights characterizes the increased amount of connections caused by the adapting to input data (11a) of dimensionality m > n.

4. The method (100) of any one of claims 1 to 3, wherein the neural network (1) comprises a convolutional layer (11) that accepts input data (11a) of dimensionality n and delivers output data (11c) of dimensionality o, and a pooling layer (12) that accepts input data (12a) of dimensionality p ≤ o and maps them to output data (12c) of dimensionality r < o, and the method (100) comprises:
• scaling and/or augmenting (110) the processing function of the convolutional layer (11) so that it accommodates input data (11a) of dimensionality m > n and delivers output data (11c) of dimensionality o', with o' > o;
• scaling and/or augmenting (120) the processing function of the pooling layer (12) so that it still delivers output data (12c) of dimensionality r.

5. The method (100) of any one of claims 1 to 4, further comprising: scaling (105) the input data (1a) of dimensionality M down to a dimensionality M' < M before inputting it into an input layer of the neural network (1).

6. A method (200) for processing input data (1a) of dimensionality M with a neural network (1) that was trained to handle input data (1a) of dimensionality N < M, comprising the steps of:
• adapting (210), using the method (100) of any one of claims 1 to 5, the neural network (1) to handle input data (1a) of dimensionality M; and
• processing (220) the input data (1a) with the adapted neural network (1').

7. A method (300) for further training a neural network (1) that was pre-trained to handle input data (1a) of dimensionality N, comprising the steps of:
• adapting (310), using the method (100) of any one of claims 1 to 5, the neural network (1) to handle input data of dimensionality M; and
• further training (320) the adapted neural network (1') with training data of dimensionality M.

8. The method (300) of claim 7, wherein the further training (320) is performed (321) for a task that is a special case of the task to which the neural network (1) was pre-trained.

9. The method (100, 200, 300) of any one of claims 1 to 8, wherein the input data (1a) of the neural network (1) comprises images and the output data (1c) of the neural network (1) comprises a classification of the images with regards to at least one property.

10. The method (100, 200, 300) of claim 9, further comprising: processing (220, 410) at least one input image (1a) with the adapted neural network (1'), and actuating (420), based on the outcome (1c) of the classification, at least one automated optical inspection apparatus (2), at least one vehicle (3), at least one medical imaging system (4), at least one remote-sensing imaging system (5), and/or at least one video surveillance system (6).

11. A computer program, comprising instructions that, when executed by one or more computers, and/or by a control unit, and/or an embedded system, cause the one or more computers, and/or the control unit, and/or the embedded system, to carry out a method (100, 200, 300) of any one of claims 1 to 10.

12. A non-transitory machine-readable storage medium, and/or a download product, with the computer program of claim 11.

13. One or more computers, a control unit, and/or an embedded system, with the computer program of claim 11, with the non-transitory machine-readable storage medium of claim 12, and/or specifically adapted in another way to perform a method (100, 200, 300) of any one of claims 1 to 10.
